Europäisches Patentamt

European Patent Office

Office européen des brevets

(11) Publication number: **0 069 560**
**B1**

(12) **EUROPEAN PATENT SPECIFICATION**

(45) Date of publication of patent specification: **31.07.85**

(21) Application number: **82303488.9**

(22) Date of filing: **02.07.82**

(51) Int. Cl.⁴: **A 01 J 7/00**

(54) Milking equipment.

(30) Priority: **07.07.81 GB 8120896**

(43) Date of publication of application:
**12.01.83 Bulletin 83/02**

(45) Publication of the grant of the patent:
**31.07.85 Bulletin 85/31**

(84) Designated Contracting States:
**BE FR GB NL**

(56) References cited:
**DE-C- 941 824**
**FR-A-2 330 311**
**FR-A-2 403 018**
**GB-A-1 214 047**
**SE-A- 331 611**
**US-A-4 168 677**
**US-A-4 175 514**

(73) Proprietor: **THE GASCOIGNE GROUP LIMITED**
**Berkeley Avenue**
**Reading Berkshire (GB)**

(72) Inventor: **Hawkins, Michael Francis**
**549 Basingstoke Road**
**Reading Berkshire (GB)**
Inventor: **Dowling, Michael John**
**29 Sewell Avenue**
**Wokingham Berkshire (GB)**

(74) Representative: **Boon, Graham Anthony et al**
**Elkington and Fife High Holborn House 52/54**
**High Holborn**
**London, WC1V 6SH (GB)**

Courier Press, Leamington Spa, England.

## Description

This invention relates to a milking apparatus.

Milking machines have, at each milking point, a cluster which comprises four teat cups connected to a clawpiece. The clawpiece is connected to a vacuum line for supplying vacuum to the cluster, and a milk line for taking away milk produced by the animal being milked.

One major problem in the dairy industry is the condition known as mastitis, which is caused by a microorganism and involves inflammation of the tissues of the udder. Mastitis is of particular concern to the dairy farmer in that it causes a reduction in milk yield, which can sometimes be very substantial. The microorganisms causing mastitis can be transferred from one cow to another as a given cluster is used to milk a succession of animals. Accordingly, various systems have been proposed for sanitising the milking equipment between the milking of each animal. One such proposed system, which is disclosed in U.S. Patent 4168677, involves passing sanitising fluid into and through each cluster between successive milking operations. However, in order to be effective a large volume of sanitising fluid must be used at a relatively high pressure, in order to ensure that all of the surface which might carry the above mentioned microorganisms is adequately washed by the fluid.

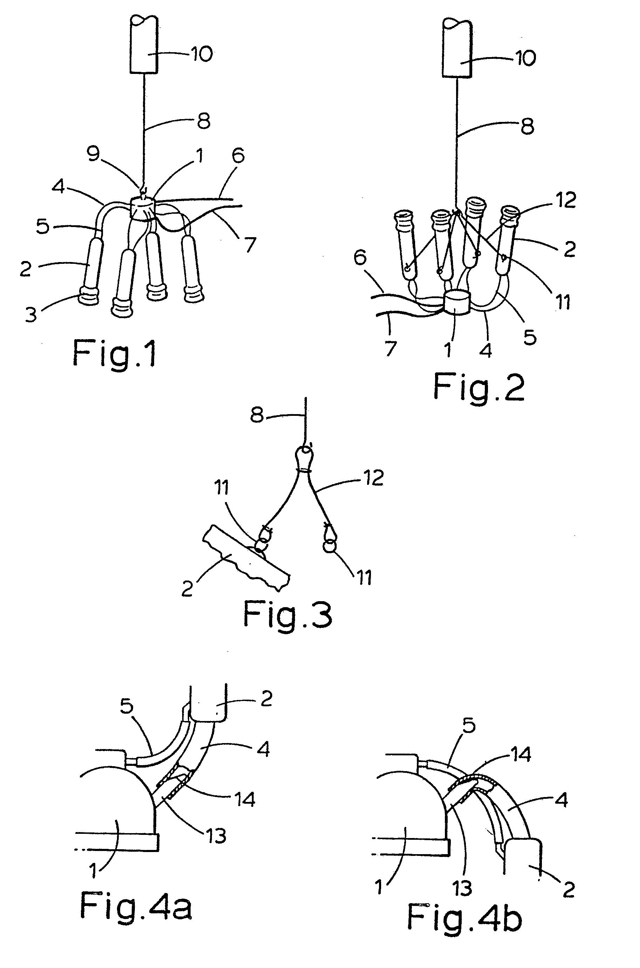

The reason why this is so will be apparent on consideration of Figure 1 of the accompanying drawings, which shows, in diagrammatic form, a known milking machine cluster. This cluster comprises a clawpiece 1 to which are attached four teat cups 2. Each teat cup terminates in a teat-engaging member 3, which is made of rubber or similar material. The teat cups 2 are connected to the clawpiece 1 by a short milk tube 4 and a short pulse tube 5. The short milk tube 4 carries milk from the teat cup 2 to the clawpiece 1, and the short pulse tube 5 applies pulsating vacuum from the clawpiece to the teat cup. The clawpiece 1 is supplied with pulsating vacuum by a long pulse tube 6, and milk is carried away from the clawpiece by a long milk tube 7. The cluster is suspended from a line 8 by means of a hook and eye arrangement 9 provided at the top of the clawpiece. In the construction illustrated in Figure 1 the upper end of the line 8 is connected to a device 10, which is shown only in part, which serves to remove the cluster automatically from the udder of a cow when the milk flow has fallen to a predetermined level. As will be appreciated, in Figure 1, the cluster is shown in the position which it occupies between successive milking operations.

Figures 4a and 4b show in detail part of the cluster of Figure 1, with Figure 4a showing the position adopted when the cluster is in use during milking, with the teat cups pointing upwards, and Figure 4b showing the position adopted when the cluster is not milking the cow, with the teat cups pointing downwards. The short milk tubes 4 are each connected to the clawpiece 1 by a respective nozzle 13 having an open end 14 which extends obliquely with respect to the nozzle axis. In the position shown in Figure 4a milk is able to enter the open end 14 and thence pass to the clawpiece 1. In the position shown in Figure 4b the open end 14 is closed off by the curved wall of the short milk tube 4. The position shown in Figure 4b is of course the same as the position shown in Figure 1. This means that when the cluster is not milking but under vacuum power to milking, the short milk tubes 4 are closed and therefore sealing the milking vacuum system from unnecessary air entry.

Suppose now that sanitising liquid were introduced into the cluster, for example through the long milk tube 7 or through some separate line. The sanitising fluid would flow through the clawpiece and thence into the teat cups 2, and from there would flow out of the lower end of the teat cups. However, unless a high volume of sanitising liquid is introduced per unit time and at a high enough pressure to force its way past the shut off open end 14 (Figure 4b), such as to substantially flood the interior or the teat cups, there is a substantial risk that at least some of the interior surfaces of the teat cups, including the teat engaging members 3, will not be cleansed by the liquid. An object of the present invention is to provide a cluster which it is possible to sanitise reliably and using only relatively small quantities of sanitising fluid at low pressure.

FR—A—2403018, FR—A—2330311, and SEA—331611 each discloses a milking apparatus which comprises (a) a cluster comprising a clawpiece, at least one teat cup attached to the clawpiece and having an open end, and a milk tube extending between the clawpiece and the or each teat cup and (b) cluster suspension means attached to the or each teat cup for so suspending the cluster that the open end of the or each teat cup is directed in a generally upward or horizontal direction. However, none of the documents addresses the problems of cleaning set out above.

According to the present invention there is provided a milking apparatus which comprises (a) a cluster comprising a clawpiece at least one teat cup attached to the clawpiece and having an open end, and a milk tube extending between the clawpiece and the or each teat cup and (b) cluster suspension means attached to the or each teat cup for so suspending the cluster that the open end of the or each teat cup is directed in a generally upward to horizontal direction; characterized in that (c) the cluster is so suspended that the or each milk tube is open to allow liquid to pass therealong; and (d) a cleansing arrangement is provided which includes means for introducing sanitising fluid into the or each teat cup.

In the accompanying drawings:

Figure 1, as mentioned above, shows in diagrammatic form a known milking machine custer;

Figure 2 shows in diagrammatic form a milking machine cluster, forming part of an apparatus according to the invention;

Figure 3 shows a detail of cluster of Figure 2;

Figures 4a and 4b, as mentioned above, show a detail of the milking machine cluster of Figure 1 on an enlarged scale, Figure 4a showing the cluster in the position of use in milking and Figure 4b showing the cluster when not in use in milking; and

Figure 5 shows an embodiment of the sanitising arrangement used in the present invention.

In the embodiment of the invention shown in Figure 2, each teat cup is provided with a ring 11 which is positioned on the exterior surface of the cup at a point near the end thereof connected to the vacuum and milk lines. The rings 11 are connected in pairs to a hook at the lower end of the line 8. This is achieved by a pair of connectors 12, one of which is shown diagrammatically in more detail in Figure 3. It must be emphasised, however, that many alternative methods of connection could be used, and, for example, each teat cup could be provided with its own connector 12.

The position of the rings 11 on the teat cups 2 is chosen to be near enough to the open end thereof so that the teat cups do not hang downwardly when suspended. Preferably, the teat cups should all be directed in a generally upward direction, though in practice it is acceptable if the teat cups are directed generally horizontally. At the same time, however, care should be taken to ensure that the position of the rings 11 is not so near to the open ends of the teat cups that the teat cups are held together too rigidly by the tension forces existing in the connectors 12. If this were to be the case it would be difficult for an operator to position the teat cups on the teats of the animal being milked.

It will be understood that suspending the teat cups with their open ends upwards means that there is no need to use high pressure sanitising fluid since the cluster is sanitised with the teat cups in the position shown in Figure 4a, not the position shown in Figure 4b.

During the sanitizing procedure the suspension method in Figure 2 means that the cluster can be completely flooded with rinse and sanitizing fluids, thereby thoroughly cleaning and sanitizing the inside of the entire cluster, with excess fluids overflowing at the teat engaging member 3.

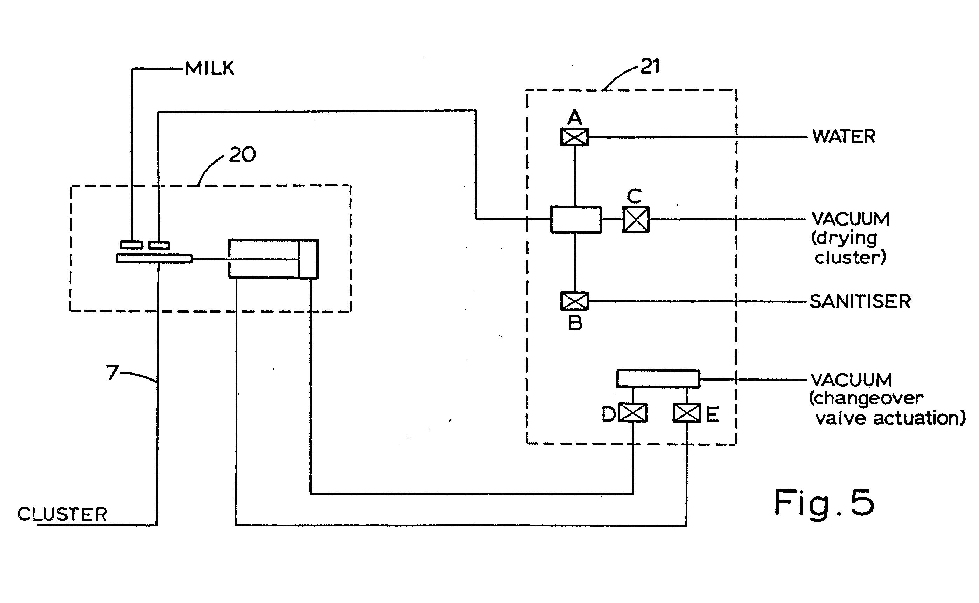

For the purpose of sanitising, an arrangement may be used which is, for example, as shown in Figure 5 of the accompanying drawings. This includes a changeover valve 20 and a valve module 21 containing valves A to E. The changeover valve has a first position in which it connects the long milk tube 7 of the cluster to a milk transport line, and a second position (the position illustrated in Figure 5) in which the cluster is connected to the valve module 21.

The sanitising operation has the following steps, and the table set out after the list of steps gives the positions of the valves A to E during each step as being either open (O) or closed (C).

1. The cluster is removed from the udder of the animal being milked.
2. A signal generated by step 1 moves the changeover valve from its first position to its second position.
3. A delay time, which can be adjustable, for example up to 20 seconds, elapses. This is to give the operator the option of not carrying out sanitising, for example if the cluster removal was accidental.
4. The cluster is lowered to its lower position.
5. Water is introduced from an appropriate source through the water line via the valve A into the cluster to wash out milk remaining therein. The period for which this rinsing step is carried out may be adjustable, for example from 2 to 20 seconds.
6. Sanitising fluid is introduced into the cluster through the sanitising line via valve B. The fluid may, for example, be a solution of iodine in water, the strength of the solution being of the order of 25 to 50 ppm (parts per million). The length of the sanitising period may be adjustable, for example from 2 to 20 seconds.
7. A contact period follows while the sanitising fluid takes effect. The period for this also can be adjustable, for example from 2 to 80 seconds.
8. A further rinsing step takes place, as in step 4, this time to clean out all sanitising fluid. This may be variable, for example from 2 to 20 seconds.
9. The cluster is lifted and a draining step takes place in which vacuum is connected to the cluster to remove all water therefrom to prevent the water from being introduced into the milk removed from the next animal. This may be for an adjustable period, typically from 2 to 20 seconds.

TABLE

| STEP | VALVES | | | | |
|---|---|---|---|---|---|
| | A | B | C | D | E |
| 1 | C | C | C | C | O |
| 2 | C | C | C | O | C |
| 3 | C | C | C | O | C |
| 4 | C | C | C | O | C |
| 5 | O | C | C | O | C |
| 6 | C | O | C | O | C |
| 7 | C | C | C | O | C |
| 8 | O | C | C | O | C |
| 9 | C | C | O | O | C |

## Claims

1. A milking apparatus which comprises (a) a cluster comprising a clawpiece (1), at least one teat cup (2) attached to the clawpiece and having an open end, and a milk tube (4) extending between the clawpiece (1) and the or each teat cup (2); and (b) cluster suspension means (8, 11, 12) attached to the or each teat cup (2) for so suspending the cluster that the open end of the or each teat cup (2) is directed in a generally upward or horizontal direction; characterized in that (c) the cluster is so suspended that the or each milk tube is open to allow liquid to pass therealong; and (d) a cleansing arrangement is provided which includes means for introducing sanitising fluid into the or each teat cup (2).

2. An apparatus according to claim 1, wherein there are a plurality of teat cups (2).

3. An apparatus according to claim 2, wherein the cluster suspension means (8, 11, 12) comprises a line (8) connected at its lower end to means connected to the teat cups (2).

4. An apparatus according to claim 3, wherein the line carries a hook at the lower end thereof and the cluster is suspended from the hook by connectors (12) connected to the teat cups (2).

5. An apparatus according to any preceding claim wherein the cleansing arrangement (21) comprises means for introducing water into the teat cups.

6. A cluster according to any preceding claim, comprising a changeover valve (20) for connecting a milk tube (7) of the cluster selectively to the cleansing arrangement (21) and a milk transport line.

7. A cluster according to any preceding claim, wherein the cleansing arrangement (21) further comprises means for connecting a source of vacuum to the changeover valve and thence to the milk tube (7) of the cluster.

## Revendications

1. Un appareil à traire qui comprend: (a) une grappe comprenant un pot (1), au moins un gobelet trayeur (2) attaché au pot et ayant une extrémité ouverte et un tube (4) à lait s'étendant entre le pot (1) et le gobelet ou chaque gobelet trayeur (2), et (b) des moyens (8, 11, 12) de suspension de la grappe attachés au gobelet ou à chaque gobelet trayeur (2) pour suspendre la grappe de façon que l'extrémité ouverte du gobelet ou de chaque gobelet trayeur (2) soit dirigée dans l'ensemble vers le haut ou horizontalement; caractérisé en ce que: (c) la grappe est suspendu de façon que le tube à lait ou chaque tube à lait soit ouvert pour permettre à un liquide de circuler le long dudit tube; et (d) il est prévu un agencement de nettoyage qui comprend des moyens pour introduire un liquide stérilisateur dans le gobelet ou dans chaque gobelet trayeur (2).

2. Un appareil selon la revendication 1, dans lequel il y a plusieurs gobelets trayeurs (2).

3. Un appareil selon la revendication 2, dans lequel les moyens (8, 11, 12) de suspension de la grappe comprennent un câble (8) assemblé à son extrémité inférieure à des moyens assemblés aux aux gobelets trayeurs (2).

4. Un appareil selon la revendication 3, dans lequel le câble porte un crochet à son extrémité inférieure et la grappe de gobelets est suspendue au crochet par des organes d'assemblage (12) assemblés aux gobelets trayeurs (2).

5. Un appareil selon une quelconque revendication précédente dans lequel l'agencement de nettoyage (21) comporte des moyens pour introduire de l'eau dans les gobelets traveurs.

6. Une grappe de gobelets selon une quelconque revendication précédente comprenant une valve d'inversion (20) pour raccorder sélectivement le tube (7) à lait de la grappe de gobelets à l'agencement de nettoyage (21) et à une conduite de transport de lait.

7. Une grappe de gobelets selon une quelconque revendication précédente dans lequel l'agencement de nettoyage (21) comprend, en outre, des moyens pour raccorder une source de vide à la valve d'inversion et, de là, au tube (7) à lait de la grappe de gobelets.

## Patentansprüche

1. Melkeinrichtung, umfassend (a) ein Nest, das ein Klauenstück (1), wenigstens einen Zitzenkelch (2), der an dem Klauenstück angebracht ist und ein offenes Ende hat, und einen Milchschlauch (4), der sich zwischen dem Klauenstück (1) und dem oder jeder Zitzenkelch (2) erstreckt, umfaßt; und (b) eine Nestaufhängungseinrichtung (8, 11, 12), die an dem oder jedem Zitzenkelch (2) zum Aufhängen des Nests so, daß das offene Ende des oder jedes Zitzenkelchs (2) in einer generell aufwärtigen oder horizontalen Richtung gerichtet ist, angebracht ist; dadurch gekennzeichnet, daß (c) das Nest so aufgehängt ist, daß der oder jeder Milchschlauch so offen ist, daß er ein Durchgehen von Flüssigkeit längs desselben ermöglicht; und (d) eine Reinigungsanordnung vorgesehen ist, die eine Einrichtung zum Einführen von hygienisch machendem Strömungsmittel in der oder jeden Zitzenkelch (2) aufweist.

2. Einrichtung nach Anspruch 1, dadurch gekennzeichnet, daß eine Mehrzahl von Zitzenkelchen (2) vorgesehen ist.

3. Einrichtung nach Anspruch 2, dadurch gekennzeichnet, daß die Nestaufhängungseinrichtung (8, 11, 12) eine Leine (8) umfaßt, die an ihrem unteren Ende mit einer mit den Zitzenkelchen (2) verbundenen Einrichtung verbunden ist.

4. Einrichtung nach Anspruch 3, dadurch gekennzeichnet, daß die Leine an ihrem unteren Ende einen Haken trägt und das Nest durch Verbinder (12), die mit den Zitzenkelchen (2) verbunden sind, von dem Haken her aufgehängt ist.

5. Einrichtung nach einem der vorgergehenden Ansprüche, dadurch gekennzeichnet, daß die Reinigungsanordnung (21) eine Einrichtung zum Einführen von Wasser in die Zitzenkelche umfaßt.

6. Nest nach irgendeinem vorhergehenden Anspruch, dadurch gekennzeichnet, daß es ein Umschaltventil (20) zum wahlweisen Verbinden eines Milchschlauchs (7) des Nests mit der Reinigungsanordnung (21) und einer Milchtransportleitung umfaßt.

7. Nest nach irgendeinem vorhergehenden Anspruch, dadurch gekennzeichnet, daß die Reinigungseinrichtung (21) weiter eine Einrichtung zum Verbinden einer Unterdruckquelle mit dem Umschaltventil und von da mit dem Milchschlauch (7) des Nest umfaßt.

Fig.1

Fig.2

Fig.3

Fig.4a

Fig.4b

Fig. 5

MILK

WATER

VACUUM
(drying
cluster)

SANITISER

VACUUM
(changeover
valve actuation)

CLUSTER

0 069 560

2